# EUROPEAN PATENT APPLICATION

(11) **EP 2 953 370 A1**
(43) Date of publication of application: **09.12.2015**
(21) Application number: 14171309.9
(22) Date of filing: 05.06.2014
(51) Int. Cl.: H04N 21/235, H04N 21/431, H04N 21/435

(54) **Minimizing input lag in a remote GUI TV application**

(71) Applicant: Ziggo B.V., 3542 AB Utrecht (NL)
(72) Inventor: Lugtenberg, Gerardus Antonius Maria, 3542 AA Utrecht (NL); Meijer, Hendrikus Josephus Maria, 3542 AA Utrecht (NL)
(74) Representative: De Vries & Metman

(57) **Abstract**

The present invention enables, in an interactive television system, an input lag optimized display mode (312), e.g. a preconfigured game mode, to be selected in a display device before displaying and using a remote graphical user interface (RGUI). When leaving the RGUI, e.g. because a movie has been selected for playback, the display mode is switched back to the previous display mode, (311,313) i.e. the display mode that was active prior to selecting the input lag optimized display mode. The input lag optimized display mode (312) is set by an instruction from the backend system prior to displaying the RGUI. Switching back to the previous display mode (311,313) is also triggered by an instruction from the backend system.

## Description

### FIELD OF THE INVENTION

The present invention relates to graphical user interfaces for display devices, such as digital televisions. More specifically, the invention relates to a graphical user interface that is streamed to a display device in an interactive television system.

### BACKGROUND

Content providers of interactive digital television services, including e.g. broadcast television programs and interactive video on demand, prefer to offer a consistent user experience to their customers. To a large extend this user experience is influenced by the looks and feel of the graphical user interface (GUI) for accessing and using the digital television services as presented to the customer on a display device, such as a television set, computer display, tablet display or smartphone display.

Traditionally the GUI is generated by software running in a set-top box, smart-TV, tablet or smartphone, but with a growing diversity in such consumer equipment it is becoming increasingly difficult and expensive to provision the GUI software to the consumer equipment. A solution to this problem is to generate the GUI in the network of the content provider and stream the GUI as a video signal to the consumer equipment for display on the display device. Such remotely generated GUI is known as remote GUI (RGUI), cloud UI or streaming GUI (SGUI).

The RGUI may be used for offering interactive applications, such as a Video on Demand (VoD) catalogue and an Electronic Program Guide (EPG).

When the GUI is generated in the network, inherently there is a delay between a user input and the displayed result thereof. This delay negatively influences the user experience of the GUI. For example, if a user uses a remote control unit to navigate through a menu in the GUI, the user input is transmitted to a backend server in the network, the backend server generates an updated GUI in response to the user input and the updated GUI is received from the backend server as a video stream for display on the display device.

The present invention aims to optimize user experience of RGUIs.

### SUMMARY OF THE INVENTION

According to an aspect of the invention an interactive television system is proposed. The interactive television system comprises a backend server of a content provider that can be communicatively connected via a first communication network to a client system. The client system comprises a display device. The backend server is configured to generate a graphical user interface and transmit the graphical user interface to the client system for display on the display device. A first user input in response to the graphical user interface is receivable in the backend server. The backend server is configured to generate an updated graphical user interface in response to the first user input and transmit the updated graphical user interface to the client system via the first communication network for display on the display device. The backend server can be configured to transmit first instruction data to the client system. The client system can be configured to, in response to the first instruction data, change a display mode of the display device to a first display mode for displaying the graphical user interface or updated graphical user interface. The first display mode is an input lag optimized display mode.

According to another aspect of the invention a computer-implemented method in an interactive television system is proposed. The interactive television system comprises a backend server of a content provider that can be communicatively connected via a first communication network to a client system. The client system comprises a display device. The method can comprise receiving a graphical user interface in the client system for display on the display device. The graphical user interface is generated in the backend server. The method can further comprise transmitting a first user input in response to the graphical user interface to the backend server. The method can further comprise receiving an updated graphical user interface in the client system via the first communication network for display on the display device. The updated graphical user interface is generated in the backend server in response to the first user input. The method can further comprise receiving first instruction data in the client system from the backend server via the first communication network or via a second communication network. The method can further comprise changing in the client system, in response to the first instruction data, a display mode of the display device to a first display mode for displaying the graphical user interface. The first display mode is an input lag optimized display mode.

The backend server may be implemented as one or more computers performing the functions of the backend server. The graphical user interface may be streamed from the backend server to the client system.

Input lag is the delay between a user giving a user input and seeing the effect thereof on the display device. The first display mode is an input lag optimized display mode, such as a preconfigured game mode in a digital television. In the input lag optimized display mode advanced image processing settings may be disabled, thereby reducing extensive image preprocessing responsible for lag.

The present invention enables the input lag optimized display mode to be automatically selected before displaying and using the RGUI. The input lag optimized display mode may be set by an instruction from the backend system prior to displaying the RGUI. By setting the optimized display mode before using the RGUI, input lag may be reduced by 10% to 25%, thereby enhancing the overall user experience of the RGUI.

The embodiments of claims 2 and 15 advantageously enable switching the display mode when leaving the RGUI. Switching the display mode may be triggered by an instruction from the backend system.

The embodiment of claim 3 advantageously enables switching back to a previous display mode when leaving the RGUI. Switching back to the previous display mode may be triggered by an instruction from the backend system or by ending the interactive application. When leaving the RGUI, e.g. because a movie has been selected for playback, the display mode may be switched back to the previous display mode, i.e. the display mode that was active prior to selecting the input lag optimized display mode.

The embodiment of claim 4 advantageously enables the instruction data to be transmitted using various network architectures.

The embodiment of claim 5 advantageously enables receiving the user input via an input device. Examples of input devices are an infrared or radio frequency remote control unit, a WiFi remote control unit, a keyboard, a mouse, a speech recognition device and a gesture recognition device. A speech recognition device typically includes a microphone for receiving speech input from the end user. A gesture recognition device typically includes a camera and a processor for receiving and recognizing gestures by the end user, such as waving an arm or moving fingers in the air.

The embodiment of claim 6 advantageously enables the input device to be used on the display device or on the set-top box. As a result there may be a direct communication between the display device and the backend server or a set-top box may be used in between the display device and the backend server.

The embodiment of claim 7 advantageously enables a further reduction of input lag by tuning the capabilities and corresponding configuration settings of the set-top box and the display device. Hereto Consumer Electronics Control (CEC) on High-Definition Multimedia Interface (HDMI) may be used. Another example is using Auxiliary Video Information (AVI) InfoFrames.

The embodiment of claim 8 advantageously enables receiving the user input via a user device, such as a smartphone or tablet. The user device is typically connected to the backend server via, at least partly, a user device specific network, such as a mobile network.

The embodiment of claim 9 advantageously enables instructions to be transmitted without intermediate translation to the display device.

The embodiment of claim 10 advantageously enables instructions to be transmitted to and translated in the conditional access module. The translated instructions, in the form of the third instruction data, are transmitted from the conditional access module to the display device. This enables display devices that are incompatible with the first instructions to receive mode change instructions.

According to another aspect of the invention a backend server is proposed for use in the interactive television system of one or more of the above embodiments.

According to another aspect of the invention a client system is proposed for use in the interactive television system of one or more of the above embodiments.

According to another aspect of the invention a conditional access module, such as a CI+ 1.3 CAM or a downwards compatible higher version CAM, is proposed for use in the interactive television system of one or more of the above embodiments.

According to an aspect of the invention a computer program product is proposed, which, when being executed by a processor, is adapted to perform the method of one or more of the above embodiments.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig. 1 shows a time sequence diagram between a backend server and a client system;
Figs. 2-4 show network architectures of interactive television systems;
Figs. 5-8 show configurations of client systems;
Figs. 9-10 show conditional access module configurations in client systems;
Fig. 11 shows a state model for the display mode of a display device; and
Fig. 12 shows a block diagram illustrating an exemplary computer system.

### DETAILED DESCRIPTION

In the RGUI scenario the input lag is influenced by various factors, such as the transmission time for transmitting the user input to the backend server, the processing time in the backend server for generating the updated GUI based on the user input, the transmission time for transmitting the updated GUI to the display device and the processing time in the display device for generating the displayed video image from the video signal. The input lag is typically around 600 milliseconds.

The input lag may be reduced by optimizing the various influencing factors. The present invention focusses on the processing time in the display device for generating the displayed video image from the video signal.

For modern digital signals, significant computer processing power and memory storage is needed to prepare an input video signal for display. The input video signal is e.g. decompressed using e.g. an MPEG codec and rendered into an image bitmap stored in a frame buffer. For progressive scan display modes, the signal processing may stop here, and the frame buffer is written to the display device. In its simplest form, this processing may take several microseconds to occur. For interlaced video, additional processing may be applied to de-interlace the image and make it seem to be clearer or more detailed than it actually is. This may be done by storing several interlaced frames and then applying algorithms to determine areas of motion and stillness, and to either merge interlaced frames for smoothing or extrapolate where pixels are in motion, the resulting calculated frame buffer is then written to the display device. De-interlacing imposes a delay that can be no shorter than the number of frames being stored for reference, plus an additional variable period for calculating the resulting extrapolated frame buffer.

While the pixel response time of the display is usually listed in the monitor's specifications, manufacturers typically do not advertise the display lag of their displays, likely because the trend has been to increase display lag as manufacturers find more ways to process input at the display level before it is shown. Possible culprits are the processing overhead of HDCP, Digital Rights Management (DRM), and also DSP techniques employed to reduce the effects of ghosting - and the cause may vary depending on the model of display.

LED, LCD and plasma displays, unlike analog CRTs, have a native resolution. That is, they have a fixed grid of pixels on the screen that show the image sharpest when running at the native resolution (so nothing has to be scaled full-size which blurs the image). In order to display non-native resolutions, such displays must use video scalers, which are built into most modern monitors. As an example, a display that has a native resolution of 1600x1200 being provided a signal of 640x480 must scale width and height by 2.5x to display the image provided by the computer on the native pixels. In order to do this, while producing as few artifacts as possible, advanced signal processing is used, which can be a source of introduced latency. Interlaced video signals such as 480i and 1080i require a de-interlacing step that adds lag.

Many LED and LCD displays also use a technology called "overdrive" which buffers several frames ahead and processes the image to reduce blurring and streaks left by ghosting. The effect is that everything is displayed on the screen several frames after it was transmitted by the video source.

Display devices, such as LED, LCD, and plasma televisions, may be configured to use one of a number of predefined display modes. Hereto an end user may use an input device such as a remote control to open a display menu on the television and select the appropriate display mode. It is possible that the end user changes settings within a display mode. A display mode represents a collection of settings that are of influence to the display quality of the display device. Settings may include basic color settings, brightness and contrast, but also advanced picture processing settings as described in the background, such as video image blurring, video image sharpening, judder reduction filtering, digital noise reduction in video images (e.g. using an MPEG noise filter), dynamic contrast based on detected ambient light, and motion detection filters to remove drag from fast scenes with a lot of movement to provide a clearer picture.

Enabling the advanced image processing settings introduces a delay between receiving a video stream and displaying the video image on the display device caused by the image processing involved. This delay is large enough to be noticeable by the end user, e.g. when playing high frame rate fast action video games via the display device. Many televisions, video scalers and other consumer-display devices now offer what is often called a "game mode" in which the extensive preprocessing responsible for additional lag is specifically sacrificed to decrease latency. The game mode may be selected by the end user prior to playing a video game.

The present invention enables an input lag optimized display mode to be automatically selected before displaying and using the RGUI. When leaving the RGUI, e.g. because a movie has been selected for playback, the display mode may be switched back to the previous display mode, i.e. the display mode that was active prior to selecting the input lag optimized display mode. The input lag optimized display mode, herein after also called optimized display mode or first display mode, may be set by an instruction from the backend system prior to displaying the RGUI. Switching back to the previous display mode, hereinafter also called second display mode, may also triggered by an instruction from the backend system.

By setting the optimized display mode for using the RGUI, the earlier mentioned latency of 600 milliseconds may be reduced by 10% to 25%, thereby enhancing the overall user experience of the RGUI.

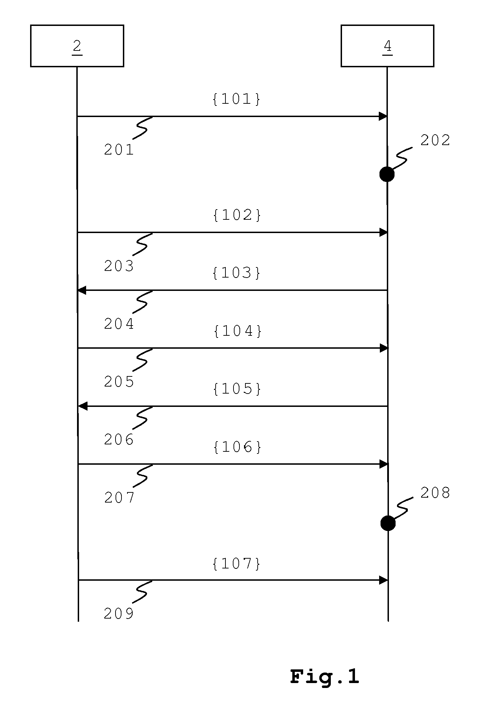

Fig. 1 shows a time-sequence diagram of an exemplary embodiment of the invention, wherein the optimized display mode is activated when the RGUI starts and wherein the previous display mode is selected when the RGUI ends. Arrows indicate messages or instructions between a backend server 2 and a client system 4. Black dots indicate actions being performed in response to a received instruction. Reference numbers in between accolades depict data being transmitted. Data may include instructions, responses to instructions and video signals.

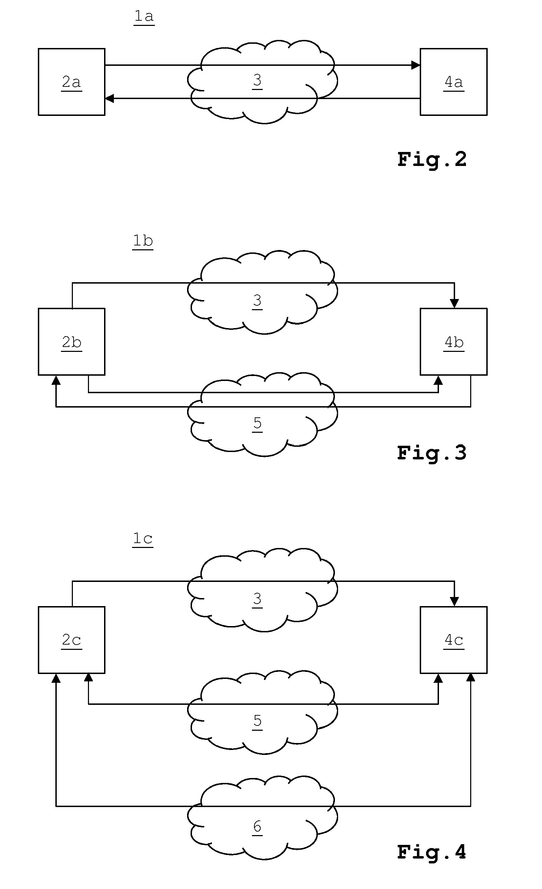

The backend server 2 is communicatively connected via a communication network to the client system 4. An example of a communication network is a cable network using DVB-C for distributing video signals (including those representing the RGUI) from the backend server 2 to the client system 4 and using an internet protocol (IP) based control plane for exchanging instructions and corresponding responses between the backend server 2 and the user system 4. Yet another example is an IP based network for transmitting the video signals and the instructions. Various examples of network architectures will be explained in more detail with Figs. 2-4.

The client system includes a display device 41 for displaying the RGUI and other video content. Audio may be included with the video.

The backend server 2 transmits 201 first instruction data 101 to the client system 4. In response hereto, the client system 4 changes 202 a display mode of the display device to a first display mode, which is a lag optimized display mode. Next, the backend server 2 generates and transmits 203 a graphical user interface 102 as a video signal to the client system 4 for display on the display device as a RGUI. An end user using the RGUI typically provides input to the RGUI by using an input device such as a remote control device. Alternatively or additionally the input may be provided using speech commands or gesture commands. First user input 103 resulting in an update of the displayed RGUI is transmitted 204 from the client system 4 to the backend server 2. In response to the user input 103 the backend server 2 generates an updated graphical user interface 104 and transmits 205 the updated graphical user interface 104 as a video signal to the client system 4 for display on the display device. The steps 103 and 104 may be repeated for as long as the end user is using the RGUI.

The user input may result in leaving the RGUI, e.g. when a movie is selected for subsequent display or when switching to watching a television program. Such user input may be transmitted 206 as a second user input 105 from the client system 4 to the backend server 2. In response, the backend server 2 transmits 207 second instruction data 106 to the client system 4 for changing 208 the display mode of the display device to a second display mode, which is the display mode that was active before switching to the optimized display mode. Information 107 in the form of video signals other than the RGUI may subsequently be transmitted 209 to the client system 4. The information 107 may originate from the backend server 2 or any other content server.

As indicated above, various network architectures may be used between the backend server 2 and the client system 4 for realizing an interactive television system utilizing a RGUI in a lag optimized display mode.

In Fig. 2 an exemplary interactive television system 1a includes a backend server 2a and a client system 4a, which are communicatively connected by a first network 3. The first network 3 is used for transmitting video signals, including those representing a RGUI, and instructions from the backend server 2a to the client system 4a. The first network 3 is also used for transmitting user input to the RGUI from the client system 4a to the backend server 2a. The user input may be given using an input device such as an infrared, RF or WiFi remote control unit, a mouse, a keyboard, a speech recognition device or a gesture recognition device. An example of the first network 3 is a cable network using DVB-C for distributing the video signals and using a Doscis IP based control plane. Another example is an IP based network.

In Fig. 3 an exemplary interactive television system 1b includes a backend server 2b and a client system 4b, which are communicatively connected by a first network 3 and a second network 5. The first network 3 is used for transmitting video signals, including those representing a RGUI from the backend server 2b to the client system 4b. The second network 5 is used for transmitting instructions from the backend server 2b to the client system 4b and transmitting user input to the RGUI from the client system 4b to the backend server 2b. The user input may be given using an input device such as an infrared, RF or WiFi remote control unit, a mouse, a keyboard, a speech recognition device or a gesture recognition device. An example of the first network 3 is a cable network using DVB-C. An example of the second network is an IP based network. In the example of Fig.3 first network 3 and second network 5 may be operated by different network operators.

In Fig. 4 an exemplary interactive television system 1c includes a backend server 2c and a client system 4c, which are communicatively connected by a first network 3, a second network 5 and a third network 6. The first network 3 is used for transmitting video signals, including those representing a RGUI from the backend server 2c to the client system 4c. The second network 5 is used for transmitting instructions from the backend server 2c to the client system 4c. The third network 6 is used for transmitting user input to the RGUI from the client system 4c to the backend server 2c. In this example the user input may be given by a user device that is not connected to the display device, such as a smartphone or a table. An example of the first network 3 is a cable network using DVB-C. An example of the second network is an IP based network. An example of the third network is an IP based network that partially includes a mobile network such as a GPRS, UMTS or LTE network.

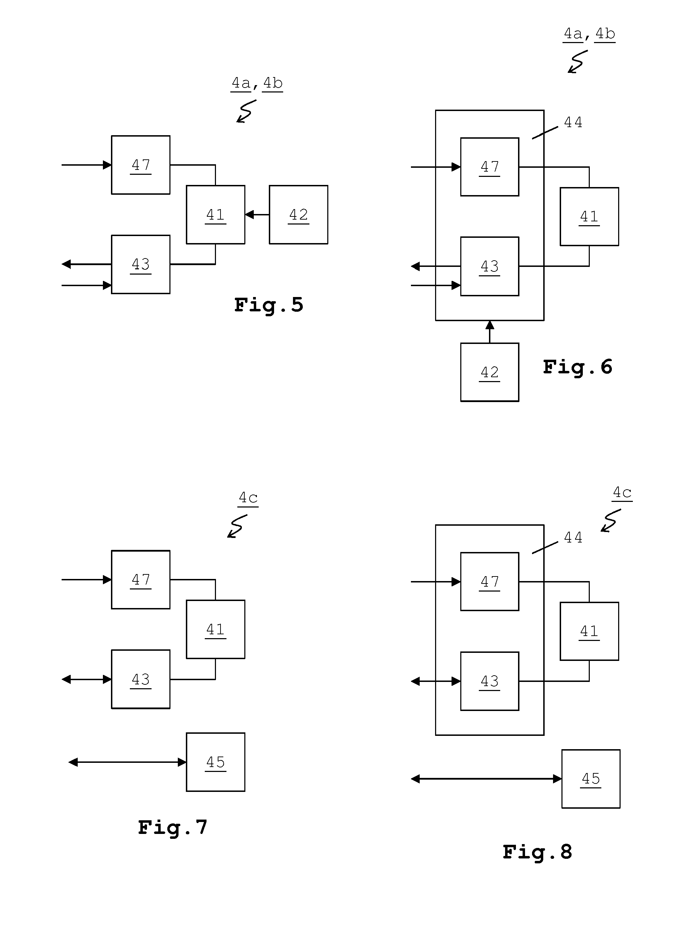

Fig. 5 shows an exemplary embodiment of a client system 4a,4b, which may be used in a network architecture as shown in Fig. 2 or Fig. 3. A receiver 47 may be used for receiving video signals, including those representing a RGUI. Communication module 43 may be used for transmitting user input data to the backend server. In the network architecture of Fig. 3 the communication module 43 is used for receiving the instructions from the backend server. The video signal with the RGUI may be processed, after which the RGUI is displayed on the display device 41. The receiver 47 and the communication module 43 may be integrated in the display device 41. An input device 42 is used to interact with the display device 41 for using the RGUI.

Fig. 6 shows another exemplary embodiment of a client system 4a,4b, which may be used in a network architecture as shown in Fig. 2 or Fig. 3 . The description of the elements in Fig. 5 applies to Fig. 6, with the following exceptions. In addition to the elements shown in Fig. 5, the client system of Fig. 6 includes a set-top box 44 that is connected to the display device 41. The receiver 47 and the communication module 43 may be integrated in the set-top box 44. The input device 42 is used to interact with the set-top box 44 for using the RGUI.

Fig. 7 shows an exemplary embodiment of a client system 4c, which may be used in a network architecture as shown in Fig. 4. A receiver 47 may be used for receiving video signals, including those representing a RGUI. User device 45, which is e.g. a smartphone or a table, may be used for transmitting user input data to the backend server. In the network architecture of Fig. 4 the communication module 43 is used for receiving the instructions from the backend server. The video signal with the RGUI may be processed, after which the RGUI is displayed on the display device 41. The receiver 47 and the communication module 43 may be integrated in the display device 41. The user device 45 is used to interact with the RGUI.

Fig. 8 shows another exemplary embodiment of a client system 4c, which may be used in a network architecture as shown in Fig. 4. The description of the elements in Fig. 7 applies to Fig. 8, with the following exceptions. In addition to the elements shown in Fig. 7, the client system of Fig. 8 includes a set-top box 44 that is connected to the display device 41. The receiver 47 and the communication module 43 may be integrated in the set-top box 44.

The communication module 43 may include an internal Eurodocsis and/or Ethernet module and/or a conditional access module (CAM), such as a CI+ 1.3 CAM or a downwards compatible higher version CAM.

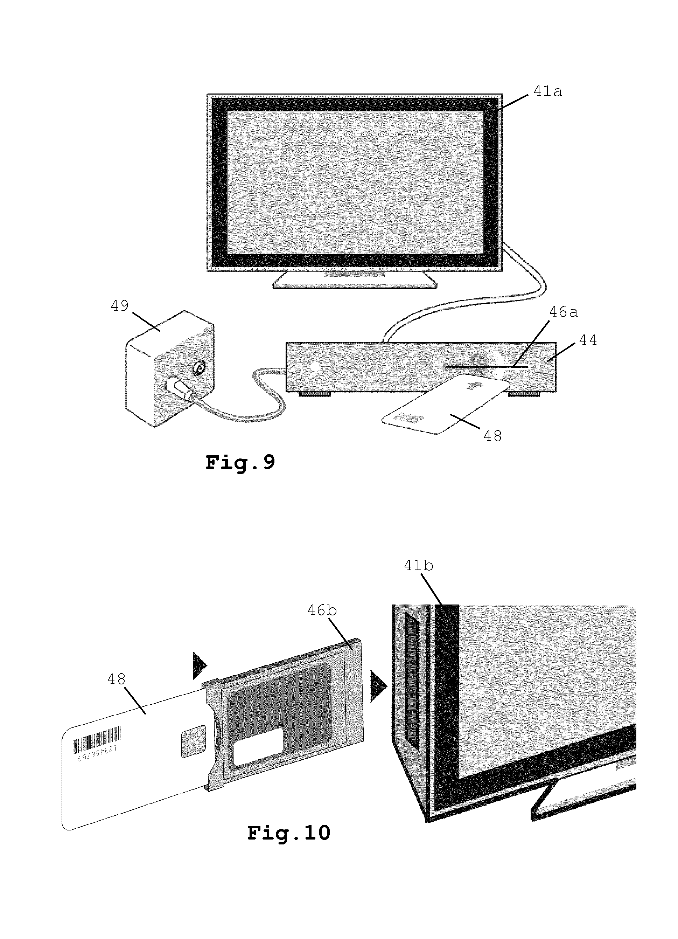

In Fig. 9 an exemplary client system is shown, including a set-top box 44 with integrated CAM 46a and a display device 41a in the form of a television. The set-top box 44 is communicatively connected to the first network 3 and/or second network 5 via wall socket 49. In the example of Fig. 9 the connection to the wall socket 49 is made with a coax cable, in which case the set-top box 44 typically includes an eDocsis modem. As an alternative the wired connection could be based on Ethernet using an UTP cable between the client device and a router. Alternatively the set-top box 44 may be wirelessly connected to the first network 3 and/or second network 5. In Fig. 10 a part of another exemplary client system is shown, wherein a CAM 46b is integrated into a display device 41b in the form of a television.

The CAM 46a,46b may be used after insertion of a smartcard 48. The smartcard 48 may contain authentication information and cryptographic data required for using services provided by the backend server of the content provider. Communication between CAM 46a,46b and the backend server 2 may be performed by means of Low Speed Communication Resource, a feature of CI+ 1.3.

As an example, the end user may start the RGUI on the television by pressing a special key, such as the red button, on a remote control unit. This triggers an application in the television and in the CAM to setup a session with the backend server. The backend server instructs the television to select the optimized display mode and tune to a particular VoD channel for receiving the RGUI, and starts streaming a menu / GUI page. From the received menu / GUI page the user can navigate by sending keystrokes to the backend server. The backend server interprets the keystroke via a specific application engine and responses by changing the menu or GUI. The updated menu / GUI page is then streamed to the television. The end user may decide to select and purchase a VoD title. After selecting this title the backend server instructs the display device to select the previous display mode and tune to another service for receiving the selected video. Subsequently the selected video may be streamed to the display device.

The control plane of the interactive television system, which may be used for transmitting the instructions from the backend server 2 to the client system 4 and for transmitting the RGUI related user input from the client system 4 to the backend system 2, may be based on the remote framebuffer (RFB) protocol. The RFB protocol is an existing protocol for remote access to graphical user interfaces. The RFB protocol is a binary protocol, which can operate over any reliable transport, either byte-stream or message based. Conventionally it is used over a TCP/IP connection. The RFB protocol may be extended to better suit the application of the RGUI in the interactive television system, e.g. by adding support for user interface streaming over MPEG.

The extended RFB protocol may allow a client system 4 to setup a session to a backend server 2, receive instructions for switching the display mode, receive screen updates as pixel data and/or as MPEG stream, transmit user input e.g. in the form of an indication of one or more keys pressed on a remote control unit 42 or user device 45 to the backend server 2, and terminate a session. The user input is e.g. transmitted as X11 KEYSYM values or a variant thereof.

The invention is not limited to the RFB or extended RFB protocol. Any other suitable protocol may be used, such as the extended remote technology (XRT) protocol. XRT is a command-and-control protocol based upon TCP/IP. It is most often used to send display drawing commands and receive user input from remote client devices. A XRT server generally performs rendering and receives key input from the XRT client. The XRT client generally receives display region updates and passes back input.

The client system 4 may receive an MPEG Transport Stream over DVB, HTTP streaming over TCP/IP or as MPEG Transport over UDP/IP. Pixel data received via the RFB protocol may be overlaid on top of MPEG video data.

The backend server 2 may stream the user interface as an MPEG Transport Stream that is transmitted on a separate network resource (cable or IP). The backend server 2 may direct the client system (temporarily) to a different server where the client system will receive an MPEG stream with the RGUI from, as well as transmit key code events to. The different server is typically a RGUI streamer server, but may be a VoD server. The different server may use its own protocol.

A RGUI session may be setup as follows. The backend server 2 may inform the client system 4 of the availability of an embedded MPEG user interface by sending an RFB setup message, indicating where the user interface stream can be obtained and what its characteristics are. An instruction to change the display mode to the lag optimized display mode, e.g. to a preconfigured game mode, may be included in the setup message. Alternatively this instruction may be transmitted separately. The client system 4 switches the display mode and may set up the required video decoding stages in accordance to the RFB setup message parameters (including tuning to a cable resource or setting up IP network resources) and, when ready, send an RFB response message to the backend server 2. Meanwhile, the backend server 2 may start to stream the user interface to the client system 4. The client system 4 may test whether it is able to successfully receive and descramble (or decrypt) the stream (smartcard 48 may be required for this) and whether the stream can be successfully decoded. It may send the results of its findings as an RFB confirmation message to the backend server 2. The order of these steps may differ, depending on the stream delivery method.

The backend server 2 may communicate with a CAM application in a CAM 46a,46b. RFB instructions for changing the display mode may be received in the CAM application and forwarded to an application in the display device for changing the display mode. Alternatively the CAM application may generate another instruction and send this other instruction to the application in the display device for changing the display mode. Conversion from the instruction may be required if the display device is incompatible with the RFB instructions.

A further reduction of the input lag may be achieved by tuning the capabilities and corresponding configuration settings of the set-top box and the display device. Hereto for example HDMI-CEC may be used for connecting the set-top box to the display device. Consumer Electronics Control (CEC) is an High-Definition Multimedia Interface (HDMI) feature best known for allowing the user to command and control up-to 15 CEC-enabled devices, that are connected through HDMI by using only one of their remote controls (for example by controlling a television set, set-top box, and DVD player using only the remote control of the TV). CEC also allows for individual CEC-enabled devices to command and control each other without user intervention. HDMI-CEC is a one-wire bidirectional serial bus that is based on the CENELEC standard AV.link protocol to perform remote control functions. HDMI-CEC is defined in HDMI Specification 1.0 and updated in HDMI 1.2, HDMI 1.2a and HDMI 1.3a. Components, such as set-top box 44 and display device 41a, connected via HDMI-CEC can exchange capability information and automatically set configuration options to optimal settings for interoperability. As a result input lag may be minimized. HDMI-CEC is also known by the following trade names: Anynet+, Aquos Link, BRAVIA Link/Sync, E-link, Kuro Link, CE-Link, Regza Link, RIHD (Remote Interactive over HDMI), RuncoLink, SimpLink, T-Link, HDAVI Control, EZ-Sync, VIERA Link, EasyLink, and NetCommand for HDMI.

Alternatively or additionally to HDMI-CEC, Auxiliary Video Information (AVI) InfoFrames may be used to tell the receiver (e.g. the display device 41a) the capabilities of the transmitter (e.g. the set-top box 44). As a result the display device may be optimally configured for interoperability with the set-top box, thereby minimizing input lag. For example, AVI infoFrames include pixel encoding and enhancement support for the video. There also are audio InfoFrames, which describe the details about the audio data formats and rate so the receiver can synchronize itself with the incoming audio data format. The AVI InfoFrames standard defines video timing requirements, discovery structures, and a data transfer structure (InfoPacket) that are used for building uncompressed, baseband, digital interfaces on digital televisions (DTV) or DTV Monitors.

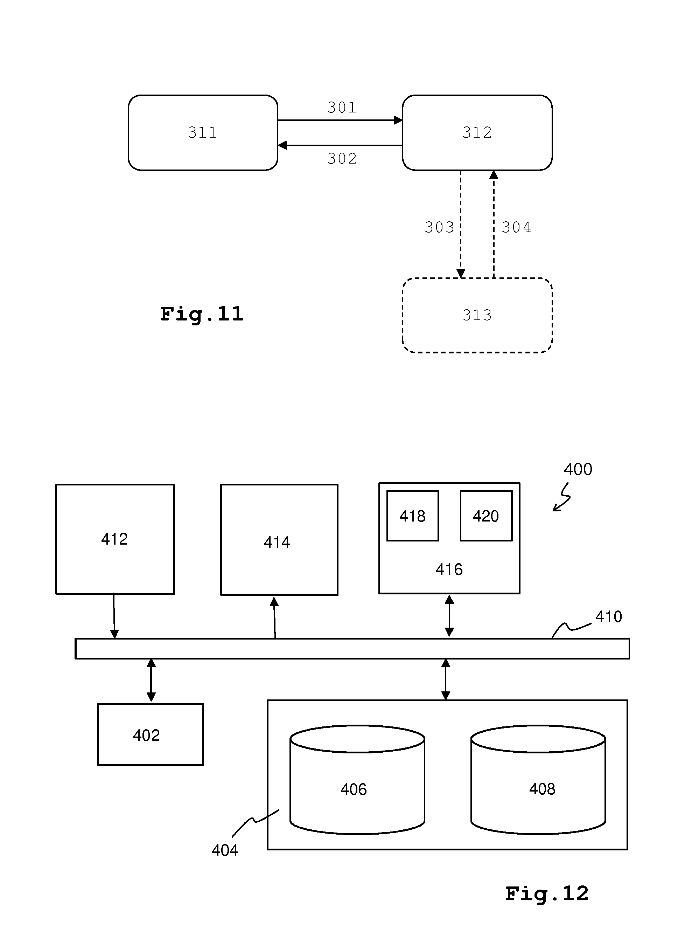

Fig. 11 shows an exemplary state model of display modes at the display device 41. The display device 41 may start in a non-optimized display mode 311. In this non-optimized display mode, display quality is given priority at an expense of input lag. The display device 41 may switch 301 to an input lag optimized display mode 312, such as a preconfigured game mode. This switch 301 may be occasioned by the start of a RGUI session and an instruction from the backend server. When the RGUI session ends, the display mode may be switched back 302 to the previous non-optimized mode 311. Switching back may be occasioned by another instruction from the back end server.

Optionally, as indicated by the dashed lines in Fig. 11, when a VoD stream is started from the RGUI the display mode may be switched back 303 to the previous non-optimized mode while playing the VoD 313. When the video ends or watching the video is ended, the display mode is switched 304 to the input lag optimized display mode 312 and the display may return to the RGUI.

Fig. 12 shows a block diagram illustrating an exemplary computer system 400, according to one embodiment of the present disclosure. A computer system 400 may be used to provide computer processing capabilities to the backend server 2, the client system 4, the display device 41, the set-top box 44, the user device 45 and/or the CAM 46a,46b.

Computer system 400 may include at least one processor 402 coupled to memory elements 404 through a system bus 410. The processor 402 typically comprises a circuitry and may be implemented as a microprocessor. As such, the computer system may store program code within memory elements 404. Further, processor 402 may execute the program code accessed from memory elements 404 via system bus 410. In one aspect, computer system 400 may be implemented as a computer that is suitable for storing and/or executing program code. It should be appreciated, however, that system 400 may be implemented in the form of any system including a processor and memory that is capable of performing the functions described within this specification.

Memory elements 404 may include one or more physical memory devices such as, for example, local memory 406 and one or more bulk storage devices 408. Local memory may refer to random access memory or other non-persistent memory device(s) generally used during actual execution of the program code. A bulk storage device may be implemented as a hard drive or other persistent data storage device. The computer system 400 may also include one or more cache memories (not shown) that provide temporary storage of at least some program code in order to reduce the number of times program code must be retrieved from bulk storage device 408 during execution.

Input/output (I/O) devices depicted as input device 412 and output device 414 optionally can be, possibly wirelessly, coupled to the data processing system. Examples of input devices may include, but are not limited to, for example, a keyboard, a pointing device such as a mouse, or the like. Examples of output devices may include, but are not limited to, for example, a monitor or display, speakers, or the like. A bi-directional input/output device may include a CI+ interface. Input device and/or output device may be coupled to computer system 400 either directly or through intervening I/O controllers. A network adapter 416 may also be coupled to computer system 400 to enable it to become coupled to other systems, computer systems, remote network devices, and/or remote storage devices through intervening private or public networks. The network adapter may, in particular, comprise a data receiver 418 for receiving data that is transmitted by said systems, devices and/or networks to said data and a data transmitter 420 for transmitting data to said systems, devices and/or networks. Modems, cable modems, and Ethernet cards are examples of different types of network adapter that may be used with computer system 400.

The memory elements 404 may store an application (not shown). It should be appreciated that computer system 400 may further execute an operating system (not shown) that can facilitate execution of the application. Application, being implemented in the form of executable program code, can be executed by computer system 400, e.g., by processor 402. Responsive to executing an application, one or more computer systems 400 may be configured to perform one or more of the operations of the backend server 2, the client system 4, the display device 41, the set-top box 44, the user device 45 and/or the CAM 46a,46b.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., hard-disk drive or any type of solid-state random-access semiconductor memory or flash memory) on which alterable information is stored. Moreover, the invention is not limited to the embodiments described above, which may be varied within the scope of the accompanying claims.

## Claims

1. An interactive television system (1a-1c) comprising a backend server (2,2a-2c) of a content provider communicatively connected via a first communication network (3) to a client system (4,4a-4c) comprising a display device (41), wherein the backend server (2,2a-2c) is configured to generate a graphical user interface (102) and transmit the graphical user interface (102) to the client system (4,4a-4c) for display on the display device (41), wherein a first user input (103) in response to the graphical user interface (102) is receivable in the backend server (2,2a-2c), and wherein the backend server (2,2a-2c) is configured to generate an updated graphical user interface (104) in response to the first user input (103) and transmit the updated graphical user interface (104) to the client system (4,4a-4c) via the first communication network (3) for display on the display device (41), **characterized in that** the backend server (2,2a-2c) is configured to transmit first instruction data (101) to the client system (4,4a-4c) and the client system (4,4a-4c) is configured to, in response to the first instruction data (101), change a display mode of the display device (41) to a first display mode for displaying the graphical user interface (102) or updated graphical user interface (104), wherein the first display mode is an input lag optimized display mode.

2. The interactive television system according to claim 1, wherein a second user input (105) in response to the graphical user interface (102) or updated graphical user interface (104) is receivable in the backend server (2,2a-2c), wherein the backend server (2,2a-2c) is configured to transmit second instruction data (106) to the client system (4,4a-4c) in response to the second user input (105), and wherein the client system (4,4a-4c) is configured to, in response to the second instruction data (106), change the display mode of the display device (41) to a second display mode for displaying information (107) other than the graphical user interface or updated graphical user interface.

3. The interactive television system according to claim 2, wherein the second display mode corresponds to a display mode of the display device (41) directly preceding the first display mode.

4. The interactive television system according to any one of the claims 1-3, wherein the backend server (2,2a-2c) is configured to transmit instruction data (101,106) to the client system (4,4a-4c) via the first communication network (3) or via a second communication network (5).

5. The interactive television system according to claims 4, wherein the client system (4,4a,4b) further comprises an input device (42) for inputting the first user input (103) and a communication module (43) for transmitting the first user input (103) to the backend server (2,2a,2b) via the first communication network (3) or via the second communication network (5).

6. The interactive television system according to claim 5, wherein the communication module (43) is a part of one of the display device (41) and a set-top box (44) communicatively connected to the display device (41).

7. The interactive television system according to claim 6, wherein the set-top box (44) and the display device (41) are configured to tune capabilities and corresponding configuration settings, e.g. using HDMI-CEC or AVI, to thereby reduce input lag.

8. The interactive television system according to claim 4, further comprising a user device (45), such as a smartphone or a tablet, communicatively connected to the backend server (2c) via a third communication network (6), wherein the user device (45) is configured for inputting the first user input and transmitting the first user input to the backend server (2c) via the third communication network (6).

9. The interactive television system according to any one of the claims 1-8, wherein the client system (4,4a-4c) comprises a conditional access module (46a,46b) and wherein the display device (41) is configured to receive the first instruction data via the conditional access module (46a,46b).

10. The interactive television system according to any one of the claims 1-8, wherein the client system (4,4a-4e) comprises a conditional access module (46a,46b), and wherein the conditional access module (46a,46b) is configured to receive the first instruction data and transmit third instruction data to the display device (41) to change the display mode of the display device (41) to the first display mode.

11. A backend server (2,2a-2c) for use in the interactive television system (1a-1c) according to any one of the claims 1-10.

12. A client system (4,4a-4c) for use in the interactive television system (1a-1c) according to any one of the claims 1-10.

13. A conditional access module (46a,46b), such as a CI+ 1.3 CAM or downwards compatible higher version CAM, for use in the interactive television system (1a-1c) according to claim 9 or claim 10.

14. A computer-implemented method in an interactive television system comprising a backend server of a content provider communicatively connected via a first communication network to a client system comprising a display device, the method comprising:
receiving (201) first instruction data (101) in the client system from the backend server via the first communication network or via a second communication network; and
changing (202) in the client system, in response to the first instruction data, a display mode of the display device to a first display mode for displaying the graphical user interface, wherein the first display mode is an input lag optimized display mode;
receiving (203) a graphical user interface (102) in the client system for display on the display device, wherein the graphical user interface is generated in the backend server;
transmitting (204) a first user input (103) in response to the graphical user interface to the backend server; and
receiving (205) an updated graphical user interface (104) in the client system via the first communication network for display on the display device, wherein the updated graphical user interface is generated in the backend server in response to the first user input.

15. The method according to claim 14, further comprising:
transmitting (206) a second user input (105) in response to the graphical user interface or the updated graphical user interface to the backend server;
receiving (207) second instruction data (106) in the client system from the backend server via the first communication network or via the second communication network in response to the second user input; and
changing (208) in the client system, in response to the second instruction data, the display mode of the display device to a second display mode for displaying information other than the graphical user interface.

16. A computer program product, which, when being executed by a processor, is adapted to perform the method according to claim 14 or claim 15.
